# EUROPÄISCHE PATENTANMELDUNG

(11) **EP 0 564 698 A1**
(43) Veröffentlichungstag der Anmeldung: **13.10.1993**
(21) Anmeldenummer: 92117698.8
(22) Anmeldetag: 16.10.1992
(51) Int. Cl.: F16J 15/34

(54) **Gleitringdichtung**

(30) Priorität: 09.04.1992 DE 4211879
(71) Anmelder: Firma Carl Freudenberg, D-69469 Weinheim (DE)
(72) Erfinder: Hintenlang, Armin, W-6945 Hirschberg (DE); Schäfer, Klaus, W-6800 Mannheim-Rheinau (DE)

(57) **Zusammenfassung**

Gleitringdichtung für eine um eine Achse (1) rotierende Welle (2), umfassend einen Gegenring (3) mit einer axialen Begrenzungsfläche (4) von im wesentlichen kreisringförmiger Gestalt, die sich im wesentlichen senkrecht zu der Achse (1) erstreckt sowie einen federnd an die Begrenzungsfläche (4) angedrückten Gleitring (5). Die Begrenzungsfläche (4) ist mit einer axialen Eintiefung (6) versehen, wobei die Eintiefung (6) in einem der Achse (1) in radialer Richtung zugewandten Teilbereich der Begrenzungsfläche (4) angeordnet ist.

## Beschreibung

Die Erfindung betrifft eine Gleitringdichtung für eine um eine Achse rotierende Welle, umfassend einen Gegenring mit einer axialen Begrenzungsfläche von im wesentlichen kreisringförmiger Gestalt, die sich im wesentlichen senkrecht zu der Achse erstreckt sowie einen federnd an die Begrenzungsfläche angedrückten Gleitring.

Derartige Gleitringdichtungen sind allgemein bekannt und gelangen beispielsweise zur Abdichtung von Kühlmittelpumpen zur Anwendung. Der Gegenring mit der axialen Begrenzungsfläche läuft mit dem rotierenden Bauteil gemeinsam um, während der Gleitring relativ unbeweglich mit der zur Anwendung gelangenden Dichtung aus elastomerem Werkstoff in einem Gehäuse angeordnet ist. Dabei ist allerdings zu beachten, daß sich während der Gebrauchsdauer im Bereich der einander berührenden Begrenzungsflächen des Gleitringes und des Gegenringes kristalline Produkte ablagern, die zu einer Beschädigung und/oder Zerstörung der einander berührenden Gleitflächen führen. Die kristallinen Produkte, beispielsweise Siliziumoxid befinden sich zunächst in dem abzudichtenden Medium, während im Gleitspalt zwischen Gegenring und Gleitring infolge Mediums- und Reibungstemperatur und dem Druckgefälle von Mediums- zu Atmosphärenseite Teile des abzudichtenden Mediums verdampfen und kristalline Rückstände zurückbleiben.

Der Erfindung liegt die Aufgabe zugrunde, eine Gleitringdichtung der vorbekannten Art derart weiterzuentwickeln, daß auf der Innenseite des Gegenringes abgelagerte, kristalline Verunreinigungen aus dem Bereich der einander reibend berührenden Begrenzungsflächen des Gleitringes und des Gegenringes entfernt werden sowie ein Eindringen der Verunreinigungspartikel in den Bereich der Gleitflächen zuverlässig verhindert wird.

Außerdem besteht die Möglichkeit, die einander berührenden Begrenzungsflächen zu kühlen, so daß auch primär eine Verunreinigung durch temperatur-/druckabhängige Auskristallisation von Mediumsbestandteilen entgegengewirkt wird.

Diese Aufgabe wird erfindungsgemäß mit den kennzeichnenden Merkmalen von Anspruch 1 gelöst. Auf vorteilhafte Ausgestaltungen nehmen die Unteransprüche Bezug.

Bei der erfindungsgemäßen Gleitringdichtung ist die Begrenzungsfläche mit einer axialen Eintiefung versehen, wobei die Eintiefung in einem der Achse in radialer Richtung zugewandten Teilbereich der Begrenzungsfläche angeordnet ist. Hierbei ist von Vorteil, daß die kristallinen Ablagerungen sofort nach der Entstehung aus dem Bereich der einander berührenden Gleitflächen von Gleitring und Gegenring in die Eintiefung gefördert werden, was zu einer deutlichen Verlängerung der Gebrauchsdauer der Gleitringdichtung bei guten Gebrauchseigenschaften führt. Ein Eindringen der Verunreinigungen in den Bereich der Gleitflächen wird wirkungsvoll verhindert.

Gemäß einer vorteilhaften Ausgestaltung kann sich der Teilbereich von der der Achse zugewandten Innenseite des Gegenringes bis zur radialen Mitte des Gleitringes erstrecken. Durch diese Ausgestaltung ist einerseits gewährleistet, daß auf der der Mediumseite zugewandten Außenseite des Gegenringes bis zur radialen Mitte eine gute Abdichtung besteht und andererseits die einander berührenden Begrenzungsflächen von Gleitring und Gegenring ausreichend aufeinander abgestützt sind, so daß Verkantungen bzw. erhöhter Verschleiß zuverlässig ausgeschlossen werden können. Die sich ablagernden, kristallinen Verunreinigungen können durch diese Ausgestaltung von den einander berührenden Gleitflächen ferngehalten werden und lagern sich zumeist in Form eines Belages an den Teilbereichen der Oberfläche des Gleitringes an, die mit anderen Bauteilen nicht berührend in Verbindung stehen.

Die Eintiefung kann auf der von der Achse abgewandten Seite durch eine die Achse umschließende, hohlkeglig in Richtung des Gleitringes in ihrem Durchmesser erweiterte Fläche begrenzt sein. Hierbei ist von Vorteil, daß ein derartig ausgestalteter Gegenring in wirtschaftlicher Hinsicht besonders einfach zu fertigen ist. Die auskristallisierten Verunreinigungen gelangen bei dieser Ausgestaltung auf besonders einfache Weise aus dem Bereich der einander berührenden Gleitflächen heraus, wodurch sowohl die Gebrauchseigenschaften als auch die Gebrauchsdauer positiv beeinflußt werden.

Die Fläche schließt mit der Achse bevorzugt einen Winkel von 8,75 bis 45° ein. Hierbei ist von Vorteil, daß durch die Ausgestaltung der Fläche die auskristallisierten Partikel, bedingt durch die Rotation des Gegenringes, nicht in die Fuge der einander berührenden und relativ zueinander beweglichen Teile gezogen werden, sondern die Fläche bevorzugt annähernd senkrecht auf der axialen Begrenzungsfläche des Gleitringes steht.

Nach einer anderen Ausgestaltung ist es vorgesehen, daß die Eintiefung im Gegenring durch eine Nut gebildet ist, die die Achse auf dem gesamten Umfang umschließt. Dabei kann es vorgesehen sein, daß die Eintiefung die Achse in gleichbleibend großem radialen Abstand umschließt. Hierbei ist von Vorteil, daß die Montage der erfindungsgemäßen Gleitringdichtung in Verbindung mit dem zur Anwendung gelangenden Gegenring sowie die Herstellung des Gegenringes besonders einfach ist. Die Anlagerung der kristallinen Verunreinigungen erfolgt dabei in der Nut.

Nach einer anderen Ausgestaltung kann es vorgesehen sein, daß die Eintiefung die Achse in einem sich stetig verändernden, radialen Abstand umschließt. Die Eintiefung kann dabei beispielsweise elliptisch, spiralförmig oder aber kreisförmig und exzentrisch zu der Achse angeordnet sein. Diese Ausgestaltungen bedingen eine Förderwirkung der Verunreinigungen aus den einander berührenden Gleitflächen von Gegenring und Gleitring zur Ablagerung in der Eintiefung. Im Bereich der Gleitflächen eingeschlossene Ablagerungen graben sich durch diese Ausgestaltung nicht immer weiter in die Gleitflächen ein und bewirken dadurch auch keinen vorzeitigen Ausfall oder eine Beeinträchtigungen der Gebrauchseigenschaften der erfindungsgemäßen Gleitringdichtung. In fertigungstechnischer Hinsicht sind Eintiefungen, die in Umfangsrichtung ineinander übergehend ausgebildet sind, vergleichsweise einfach zu fertigen. Die Gleitringdichtung kann dadurch insgesamt in wirtschaftlicher Hinsicht kostengünstig gefertigt werden.

Die Eintiefung kann an wenigstens einer Umfangsstelle von der der Achse zugewandten Innenseite des Gegenringes angeschnitten sein. Eine weiter verbesserte Abführung der unerwünschten, kristallinen Anlagerungen im axialen Bereich zwischen dem Gleitring und dem Gegenring ist demgegenüber gewährleistet, wenn die Eintiefung an mehreren Stellen des Umfanges von der der Achse zugewandten Innenseite des Gegenringes angeschnitten ist.

Die Eintiefung kann auf der von der Achse abgewandten Seite durch eine sich im wesentlichen parallel zu der Achse ersteckenden Fläche begrenzt sein. Hierbei ist von Vorteil, daß die kristallinen Ablagerungen während der bestimmungsgemäßen Verwendung der Gleitringdichtung durch die Rotation des Gegenringes nicht in die Fuge zwischen Gegenring und Gleitring gezogen werden, sondern das Eindringen der unerwünschten Bestandteile zuverlässig vermieden wird.

Die Eintiefung kann an wenigstens einer Umfangsstelle mit einer radial nach außen vorspringenden Erweiterung ihres Profiles versehen sein. Diese taschenähnlichen Erweiterungen ermöglichen die zusätzliche Aufnahme von Ablagerungen um diese zuverlässig aus dem Bereich der einander berührenden Gleitflächen abzuführen. Hierbei ist von Vorteil, daß die Eintiefung vergleichsweise schmal ausgeführt sein kann, wodurch die tragenden Gleitflächen größer gestaltet werden können, sich die Flächenpressung besser verteilt und der Verschleiß entsprechend geringer ist. Im Rahmen der vorliegenden Erfindung gelangen bevorzugt drei in Umfangsrichtung gleichmäßig verteilte, radial nach außen vorspringende Erweiterungen der Eintiefung zu Anwendung. Desweiteren wird mit dieser Ausführung ein Kühlung der Gleitflächen erreicht, wodurch die temperatur- druckabhängige Auskristallisation verhindert bzw. reduziert wird.

Die Erweiterungen, parallel zu Achse betrachtet, können ein im wesentlichen halbkreisförmiges Profil aufweisen. Hierbei ist von Vorteil, daß die kristallinen Ablagerungen kontinuierlich aus dem Bereich der Eintiefung herausgefördert werden können, da scharfe Kanten im Bereich der Erweiterung eine Abführung der Ablagerungen nicht behindern.

Gemäß einer vorteilhaften Ausgestaltung ist es vorgesehen, daß der Gegenring aus keramischen Werkstoffen bzw. Sinterwerkstoffen besteht. Die Eintiefung kann an zumindest einer Umfangsstelle der Begrenzungsfläche von der Berührungsfläche des Gleitringes zumindest teilweise überlappt sein. Hierbei ist von Vorteil, daß die teilweise Öffnung zwischen der Berührungsfläche des Gleitringes und der Eintiefung für die meisten Anwendungsfälle ausreichend ist, um die kristallinen Ablagerungen aus dem Bereich der Gleitflächen fernzuhalten und andererseits kompakte Abmessungen in radialer Richtung der Gleitringdichtung zu gewährleisten. Die Kontaktfläche zwischen Gleitring und Gegenring ist dabei ausreichend groß, ohne daß Verkantungen während der bestimmungsgemäßen Verwendung auftreten.

Der Gegenstand der vorliegenden Erfindung wird nachfolgend anhand der als Anlage beigefügten Zeichnungen weiter erläutert. Diese zeigen die zu berücksichtigenden Einzelkomponenten teilweise in schematischer Darstellung.

Figur 1 zeigt einen Schnitt durch die erfindungsgemäße Gleitringdichtung,
die Figuren 2 bis 10 zeigen jeweils Ausfünrungsbeispiele von Gegenringen, die in einer Gleitringdichtung gemäß Figur 1 zur Anwendung gelangen können.

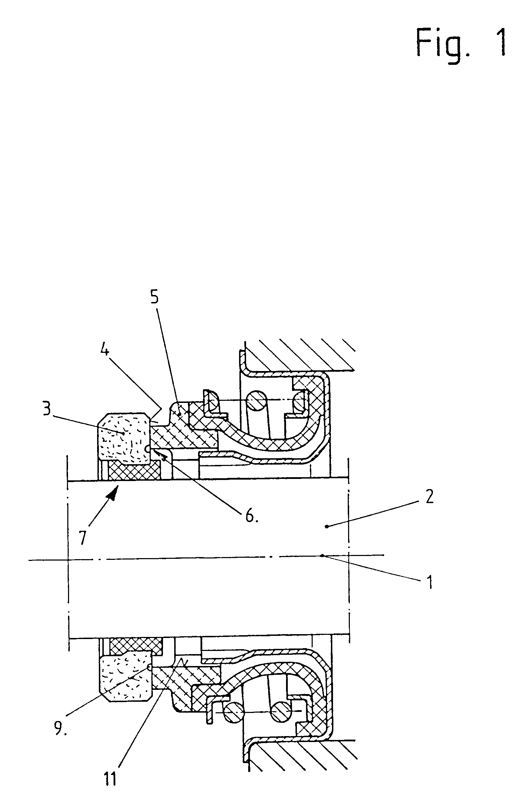

In Figur 1 ist eine Gleitringdichtung für eine Welle 2 gezeigt, die um eine Achse 1 rotiert. Die Gleitringdichtung umfaßt einen Gegenring 3 mit einer axialen Begrenzungsfläche 4, die kreisförmig gestaltet ist und sich senkrecht zur Achse 1 erstreckt. An die Begrenzungsfläche 4 des Gegenringes 3 ist federkraftbeaufschlagt ein Gleitring 5 angedrückt, wobei der Gleitring 5 und der Gegenring 3 im Bereich ihrer Kontaktflächen während der bestimmungsgemäßen Verwendung relativ zueinander beweglich sind. Die Begrenzungsfläche 4 des Gegenringes 3 weist eine axiale Eintiefung 6 auf, die sich in radialer Richtung auf zumindest einem Teilabschnitt befindet, der sich höchstens bis zur radialen Mitte des Gleitringes 5 ersteckt.

Die bei höheren Temperaturen auf der in Richtung der Achse 1 zugewandten Innenseite des Gegenringes abgelagerten, kristallinen Siliziumoxide werden dadurch aus dem Bereich der einander reibend berührenden Begrenzungsflächen des Gleitringes 5 und des Gegenringes 3 ferngehalten und an einem Eindringen in diesen Bereich zuverlässig gehindert. Diese Ausgestaltung bedingt ausgezeichnete Gebrauchseigenschaften während einer langen Gebrauchsdauer. Die Ablagerungen lagern sich sowohl in der Eintiefung 6 des Gegenringes 3 ab, als auch entlang der Achsialfläche 11 der Gleitringes 5.

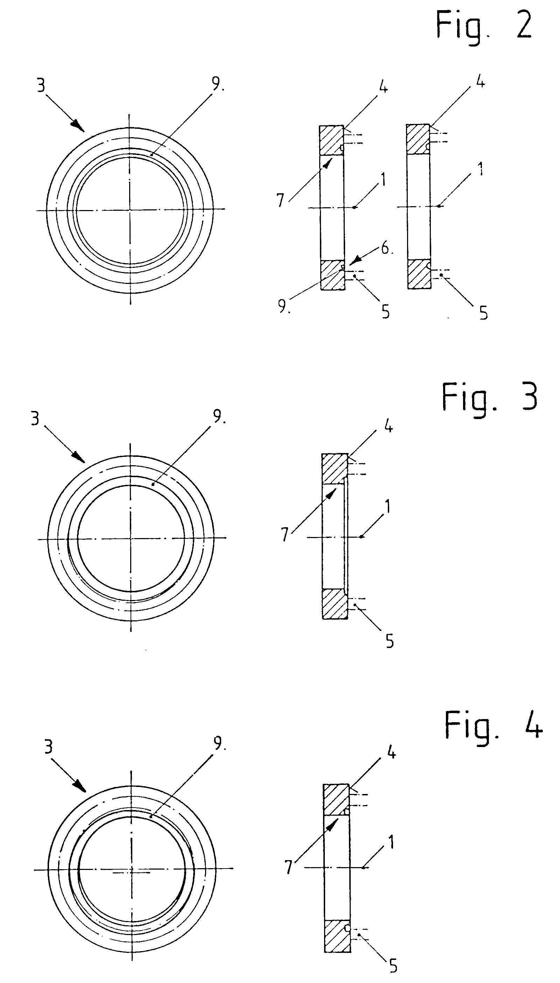

In den folgenden Figuren 2 bis 10 ist jeweils der Gegenring 3 dargestellt, der unterschiedlich ausgebildete axiale Eintiefungen 6 aufweist. Der Gleitring 5, der während der bestimmungsgemäßen Verwendung am Gegenring 3 anliegt, ist mit strichpunktierter Linie angedeutet. In Figur 2 ist der Gegenring 3 mit einer Eintiefung 6 versehen, die durch eine Nut 9 gebildet ist, die die Achse 1 auf dem gesamten Umfang in gleichbleibend großem radialem Abstand umschließt. Alternativ kann die Nut einen rechteckig oder halbkreisförmig begrenzten Querschnitt aufweisen.

Figur 3 zeigt einen Gegenring 3, der im wesentlichen dem Gegenring aus Figur 2 entspricht, wobei radial innerhalb der Gleitfläche des Gleitringes 5 eine Aussparung vorgesehen ist. Ein derartig ausgebildeter Gegenring 3 ist besonders einfach herstellbar, was in wirtschaftlicher Hinsicht von hervorzuhebendem Vorteil ist.

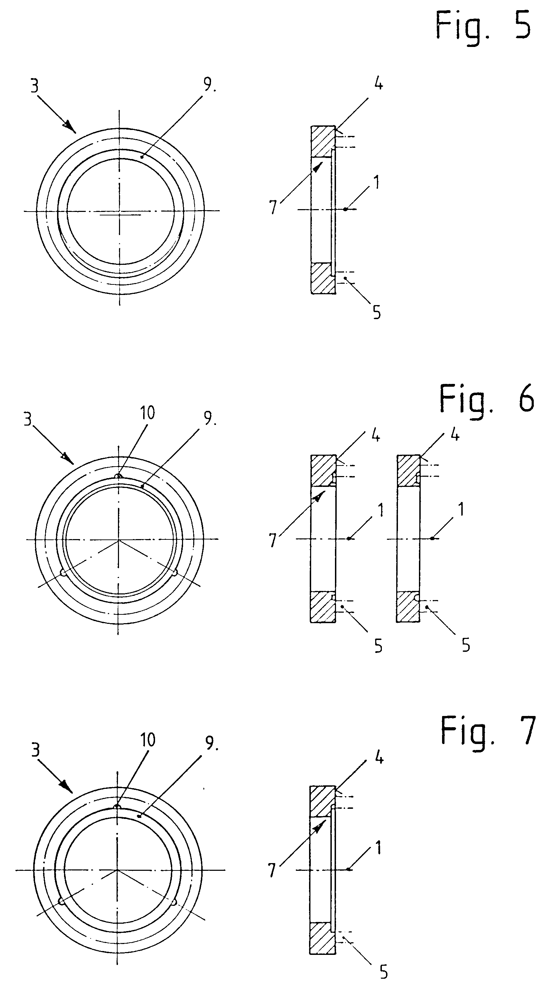

In den Figuren 4 und 5 umschließen die Eintiefungen 6 die Achse 1 in einem sich stetig verändernden, radialen Abstand. Die Eintiefungen 6 berühren in einem Umfangssegment der Begrenzungsfläche 4 die Berührungsfläche des Gleitringes 5 zumindest teilweise überlappend. Im Bereich der Berührungsflächen vorhandene Verunreinigungen werden auf diese Weise aus diesem Bereich entfernt, wodurch eine gute Gebrauchsdauer gewährleistet ist. Figur 5 entspricht im wesentlichen Figur 3.

Der in den Figuren 6 und 7 dargestellte Gegenring 3 weist radial nach außen vorspringende Erweiterungen 10 auf, die in drei gleichmäßig am Umfang verteilten Abständen angeordnet sind und Bestandteile der Eintiefung 6 bilden. Die Eintiefungen 6 können, wie bereits in den Figuren 2 und 3 beschrieben einen rechteckigen oder halbkreisförmigen Querschnitt aufweisen. Die Eintiefungen 6 sind im wesentlichen radial innerhalb der Gleitfläche des Gleitringes 5 angeordnet, wobei die Gleitfläche des Gleitringes 5 nur von den radial nach außen vorspringenden Erweiterungen berührt ist.

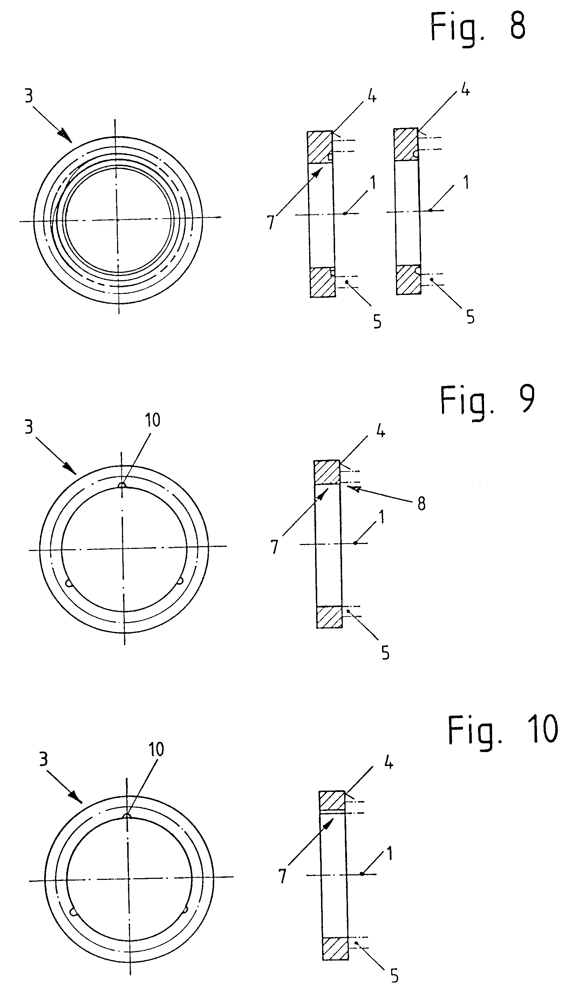

In Figur 8 ist die Eintiefung exzentrisch zur Gleitfläche des Gleitringes 5 derart angeordnet, daß sie an einer Umfangsstelle von der der Achse 1 zugewandten Innenseite 7 des Gegenringes 3 angeschnitten ist.

In Figur 9 ist ein Gegenring 3 gezeigt, der entlang seines Innenumfanges drei radial nach außen vorspringende Erweiterungen 10 aufweist, in denen Verunreinigungen aufgenommen und von der Gleitfläche zwischen Gleitring 5 und Gegenring 3 ferngehalten werden können. Der Innendurchmesser von Gleitring 5 und Gegenring 3 ist in diesem Ausführungsbeispiel identisch ausgeführt.

In Figur 10 ist ein Gegenring 3 gezeigt, dessen radial nach außen vorspringende Erweiterungen 10 sich über die gesamte axiale Ausdehnung des Gegenringes 3 erstrecken. Diese Ausgestaltung ist gegenüber der Ausgestaltung aus Figur 9 insofern vorteilhaft, als sich die Gleitflächen von Gleitring 5 und Gegenring 3 im rechten Winkel berühren, und nicht, wie in Figur 9 dargestellt, unter einem Winkel von 45°. Die Gleitflächen von Gleitring 5 und Gegenring 3 sind bei einer Ausgestaltung gemäß Figur 10 vor einer Beaufschlagung mit Verunreinigungen in vergleichsweise verbesserter Weise geschützt.

## Patentansprüche

1. Gleitringdichtung für eine um eine Achse rotierende Welle, umfassend einen Gegenring mit einer axialen Begrenzungsfläche von im wesentlichen kreisringförmiger Gestalt, die sich im wesentlichen senkrecht zu der Achse erstreckt sowie einen federnd an die Begrenzungsfläche angedrückten Gleitring, dadurch gekennzeichnet, daß die Begrenzungsfläche (4) mit einer axialen Eintiefung (6) versehen ist und daß die Eintiefung (6) in einem der Achse (1) in radialer Richtung zugewandten Teilbereich der Begrenzungsfläche (4) angeordnet ist.

2. Gleitringdichtung nach Anspruch 1, dadurch gekennzeichnet, daß sich der Teilbereich von der der Achse (1) zugewandten Innenseite (7) des Gegenringes (3) bis zur radialen Mitte des Gleitringes (5) erstreckt.

3. Gleitringdichtung nach Anspruch 1 bis 2, dadurch gekennzeichnet, daß die Eintiefung (6) auf der von der Achse (1) abgewandten Seite durch eine die Achse (1) umschließende, hohlkegelig in Richtung des Gleitringes (5) in ihrem Durchmesser erweiterte Fläche (8) begrenzt ist.

4. Gleitringdichtung nach Anspruch 3, dadurch gekennzeichnet, daß die Fläche (8) mit der Achse (1) einen Winkel von 8,75 bis 45° einschließt.

5. Gleitringdichtung nach Anspruch 1 oder 2, dadurch gekennzeichnet, daß die Eintiefung (6) durch eine Nut (9) gebildet ist, die die Achse (1) auf dem gesamten Umfang umschließt.

6. Gleitringdichtung nach Anspruch 1 bis 5, dadurch gekennzeichnet, daß die Eintiefung (6) die Achse (1) in gleichbleibend großem radialen Abstand umschließt.

7. Gleitringdichtung nach Anspruch 1 bis 5, dadurch gekennzeichnet, daß die Eintiefung (6) die Achse (1) in einem sich stetig verändernden, radialen Abstand umschließt.

8. Gleitringdichtung nach Anspruch 6 oder 7, dadurch gekennzeichnet, daß die Eintiefung (6) in Umfangsrichtung ineinander übergehend ausgebildet ist.

9. Gleitringdichtung nach Anspruch 7 bis 8, dadurch gekennzeichnet, daß die Eintiefung (6) an wenigstens einer Umfangsstelle von der der Achse (1) zugewandten Innenseite (7) des Gegenringes (3) angeschnitten ist.

10. Gleitringdichtung nach Anspruch 5 bis 8, dadurch gekennzeichnet, daß die Eintiefung (6) auf der von der Achse (1) abgewandten Seite durch eine sich im wesentlichen parallel zu der Achse (1) erstreckende Fläche begrenzt ist.

11. Gleitringdichtung nach Anspruch 1 bis 10, dadurch gekennzeichnet, daß die Eintiefung (6) an wenigstens einer Umfangsstelle mit einer radial nach außen vorspringenden Erweiterung (10) ihres Profils versehen ist.

12. Gleitringdichtung nach Anspruch 11, dadurch gekennzeichnet, daß die Erweiterung (10), parallel zu der Achse (1) betrachtet, ein im wesentlichen halbkreisförmiges Profil besitzt.

13. Gleitringdichtung nach Anspruch 1 bis 12, dadurch gekennzeichnet, daß der Gegenring (3) aus keramischen Werkstoff besteht.

14. Gleitringdichtung nach Anspruch 1 bis 13, dadurch gekennzeichnet, daß die Eintiefung (6) an zumindest einer Umfangsstelle der Begrenzungsfläche (4) von der Berührungsfläche des Gleitringes (5) zumindest teilweise überlappt ist.
